# EUROPEAN PATENT SPECIFICATION

(11) **EP 1 396 373 B1**
(45) Date of publication and mention of the grant of the patent: **21.01.2009**
(21) Application number: 03016657.3
(22) Date of filing: 31.07.2003
(51) Int. Cl.: B60K 31/00

(54) **Operating means for a cruise control in vehicles**
Bedienungsmittel für einen Fahrgeschwindigkeitsregler in Fahrzeugen
Moyens de commande pour un régulateur de vitesse dans des véhicules

(30) Priority: 07.08.2002 DE 10236224
(43) Date of publication of application: 10.03.2004
(73) Proprietor: TRW Automotive Electronics & Components GmbH, 78315 Radolfzell (DE)
(72) Inventor: Hafner, Ernst, 88709 Hagnau (DE); Bubb, Peter, 82194 Gröbenzell (DE); Götz, Matthias, 80796 München (DE)
(74) Representative: Prinz & Partner

(56) References cited:
- EP-A- 0 813 989
- DE-A1- 19 753 742
- DE-A1- 19 941 974
- GB-A- 2 355 055
- PATENT ABSTRACTS OF JAPAN vol. 1999, no. 09, 30 July 1999 (1999-07-30) & JP 11 105646 A (FUJI HEAVY IND LTD), 20 April 1999 (1999-04-20)

## Description

The invention relates to an operating means for a cruise control in vehicles.

Such operating means are designed according to the state of the art as drop arms, rocker switches or individual control buttons on the steering wheel. They are used to carry out the elementary control functions such as activate/deactivate, set, resume, accelerate and coast. In order to set a certain speed, the appropriate control element is actuated once the vehicle has reached this speed. After actuation of the control elements for the control functions of accelerate and coast, the most recently driven speed is established. In any case, setting a certain speed, e.g. in accordance with a given speed limit, calls for careful observation of the speedometer on the instrument panel of the vehicle.

GB 2 355 055 A discloses a control system for a vehicle for controlling vehicle lighting, air conditioning, navigation and communications networks using input means which comprises a handwriting recognition system.

With the operating means according to the invention, there is no need for eye contact with the speedometer of the vehicle in order to set a certain speed. The operating means according to the invention comprises a touch-sensitive control panel with at least one alphanumeric input field. At least one digit can be entered by tracing it onto the input field. The digit(s) thus entered is (are) transmitted as a setpoint value to the cruise control by a setting function.

The alphanumeric input field is divided into a plurality of zones, whereby at least one digit can be entered into each of the zones.

The setting function preferably comprises a reading function that interprets symbols that have been entered with a fingertip by roughly tracing the digit onto the input field and that only accepts only plausible alphanumeric symbols.

Moreover, the input field is preferably surrounded by several control fields that can be haptically distinguished from each other, each of which is associated with a control function.

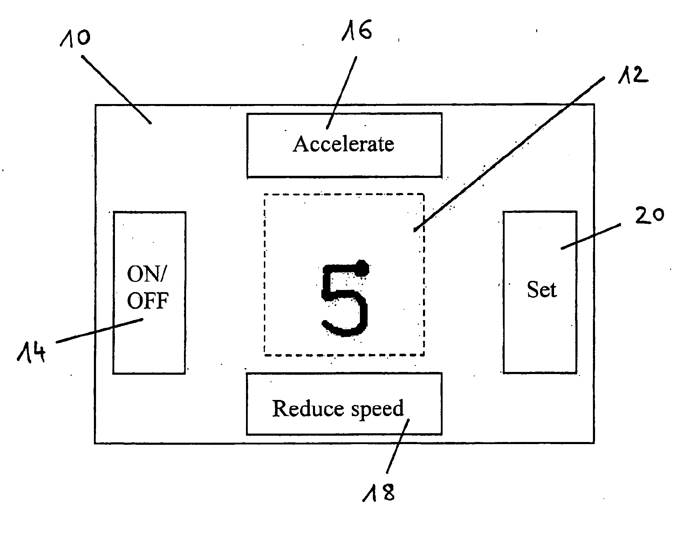

Additional features and advantages of the invention ensue from the following description of an advantageous embodiment, with reference to the appended drawing whose single figure shows a top view of a control surface of the operating means.

The control panel, which is designated in its entirety by the reference numeral 10, is touch-sensitive and can convert any (except for a fleeting) touch into an electric signal. Such control panels are known from portable computers (laptops, notebooks) as touch pads.

The control panel 10 can be arranged on the steering wheel of the vehicle, preferably on a steering wheel spoke or on the steering wheel hub, on a steering wheel satellite, on the center console or else in the area of the control field for the radio or climate-control system.

In the currently preferred embodiment, which is shown by way of an example, the control panel is generally rectangular and has a central alphanumeric input field 12. The input field 12 is surrounded by control fields 14, 16, 18, 20. The control field 14 is assigned to activating/deactivating the cruise control. The control fields 16, 18 initiate the functions "accelerate" and "reduce speed". The control field 20 sets the speed that was entered onto the input field 12. i.e. it is transmitted as the setpoint to the cruise control.

A digit is entered by "writing" (tracing) the digit onto the input field 12, i.e. by roughly tracing over the input field 12 with the fingertip or thumb (depending on the installation site in the vehicle). The digit entered in this manner is recognized by a reading function.

According to a first embodiment variant, several digits consecutively are entered one after the other, i.e. after the first digit has been traced, it is stored and the input field 12 is ready for the entry of another digit. In a second embodiment variant, the sequence of digits is entered in a spatial arrangement. In this case, the digits are traced onto the input field 12 next to each other before the entry is completed by a confirmation movement.

The entered digits are interpreted by the reading function, which only accepts plausible entries. For instance, the digit "5", entered by way of an example in the figure, is interpreted as a speed of 50 km/h and by the same token, the input sequence "1" followed by "2" could be interpreted as 120 km/h. In another version, the input field 12 is divided into several zones so that the entry of the number ""5"- depending on the zone in which it is entered - is interpreted as a speed indication of 5 km/h (pedestrian zone, neighborhood play street), 50 km/h (town) or 135 km/h (highway).

In order to set an input speed, the control field 20 is tapped. In an alternative embodiment of the operating means, there is no separate control field 20. The reading function associated with the input field 12 then interprets a brief tap of the input field 12 after entry of the speed as a setting command.

## Claims

1. A cruise control for vehicles, said cruise control comprising an operating means which comprises a touch-sensitive control panel with at least one alphanumeric input field onto which at least one digit can be entered by tracing, a digit thus entered being transmitted as a setpoint value to the cruise control by a setting function, wherein the alphanumeric input field is divided into a plurality of zones, whereby at least one digit can be entered into each of the zones.

2. The cruise control according to Claim 1, wherein the setting function is activated by tapping a control field.

3. The cruise control according to Claim 2, wherein the control field is contained within the alphanumeric input field.

4. The cruise control according to Claim 1, wherein the setting function comprises a reading function that interprets symbols that have been entered with a fingertip by roughly tracing the digit onto the alphanumeric input field and that only accepts plausible alphanumeric symbols.

5. The cruise control according to Claim 1, wherein the alphanumeric input field is surrounded by a plurality of control fields that can be haptically distinguished from each other, each of which is associated with a control function.

## Patentansprüche

1. Geschwindigkeitsregelung für Fahrzeuge, wobei die Geschwindigkeitsregelung eine Bedieneinrichtung aufweist, welche eine berührungsempfindliche Bedienfläche mit wenigstens einem alphanumerischen Eingabefeld aufweist, auf dem zumindest eine Ziffer durch Überstreichen eingegeben werden kann, wobei eine so eingegebene Ziffer durch eine Setzfunktion als Sollwert an die Geschwindigkeitsregelung übergeben wird, bei der das alphanumerische Eingabefeld in mehrere Zonen unterteilt ist, wobei in jede der Zonen wenigstens eine Ziffer eingegeben werden kann.

2. Geschwindigkeitsregelung nach Anspruch 1, bei der die Setzfunktion durch Antippen eines Bedienfeldes aktiviert wird.

3. Geschwindigkeitsregelung nach Anspruch 2, bei der das Bedienfeld in dem alphanumerischen Eingabefeld enthalten ist.

4. Geschwindigkeitsregelung nach Anspruch 1, bei der die Setzfunktion eine Lesefunktion umfasst, die Zeichen interpretiert, die durch grobes Aufstreichen der Ziffer auf das alphanumerische Eingabefeld mit einer Fingerkuppe eingegeben wurden, und nur plausible alphanumerische Zeichen annimmt.

5. Geschwindigkeitsregelung nach Anspruch 1, bei der das alphanumerische Eingabefeld von mehreren voneinander haptisch unterscheidbaren Bedienfeldern umgeben ist, von denen jedes einer Bedienfunktion zugeordnet ist.

## Revendications

1. Régulateur de vitesse pour véhicules, comportant un dispositif opérationnel comprenant un panneau de commande tactile avec au moins un champ d'introduction alphanumérique sur lequel un chiffre peut être introduit par traçage, le chiffre introduit étant transmis en tant que valeur de consigne au régulateur de vitesse par une fonction de réglage, dans lequel le champ d'introduction alphanumérique est divisé en une pluralité de zones, au moins un élément numérique pouvant être introduit dans chacune des zones.

2. Régulateur de vitesse selon la revendication 1, dans lequel la fonction de réglage est activée par effleurement d'un champ de commande.

3. Régulateur de vitesse selon la revendication 2, dans lequel le champ de commande est contenu à l'intérieur du champ d'introduction alphanumérique.

4. Régulateur de vitesse selon la revendication 1, dans lequel la fonction de réglage comprend une fonction de lecture qui interprète des symboles qui ont été introduits par le bout d'un doigt en traçant grossièrement le chiffre sur le champ d'introduction alphanumérique et qui accepte seulement des symboles alphanumériques plausibles.

5. Régulateur de vitesse selon la revendication 1, dans lequel le champ d'introduction alphanumérique est entouré d'une pluralité de champs de commande qui peuvent être distingués les uns des autres de manière haptique, chacun d'eux étant associé à une fonction de commande.
